# EUROPÄISCHE PATENTSCHRIFT

(11) **EP 0 507 232 B1**
(45) Veröffentlichungstag und Bekanntmachung des Hinweises auf die Patenterteilung: **19.10.1994**
(21) Anmeldenummer: 92105436.7
(22) Anmeldetag: 30.03.1992
(51) Int. Cl.: A01B 63/111, A01B 63/22

(54) **Steuersystem für Schlepper mit angehängtem Arbeitsgerät**
Control system for a tractor with a trailed working implement
Système de commande pour tracteur avec outil de travail tracté

(30) Priorität: 05.04.1991 US 681023
(43) Veröffentlichungstag der Anmeldung: 07.10.1992
(73) Patentinhaber: DEERE & COMPANY, Moline, Illinois 61265 (US)
(72) Erfinder: Miller, Matthew Thomas, Waterloo, Iowa 50702 (US)
(74) Vertreter: Feldmann, Bernhard

(56) Entgegenhaltungen:
- EP-A- 0 078 697
- US-A- 2 974 733
- US-A- 3 627 053
- US-A- 4 518 044

## Beschreibung

Die Erfindung betrifft ein Steuersystem für einen eine höhenverstellbare Anbauvorrichtung enthaltenden Schlepper und ein anhängbares Arbeitsgerät, welches höhenverstellbare Bodenbearbeitungswerkzeuge trägt. Das Steuersystem enthält eine Hydraulikpumpe, einen Vorratsbehälter, einen Hubwellenzylinder zum Anheben und Absenken der Anbauvorrichtung, ein Hubsteuerventil mit einem an den Hubzylinder anschließbaren Arbeitsanschluß, eine Steuereinheit zur Steuerung des am Arbeitsanschluß des Hubsteuerventils anstehenden Drucks in Abhängigkeit von Meßwerten und wenigstens einem einstellbaren Steuersignal, einen Arbeitsgerätezylinder zum Anheben und Absenken der Bodenbearbeitungswerkzeuge des anhängbaren Arbeitsgerätes und ein zwischen wenigstens zwei Positionen manuell einstellbares Umschaltventil zum wahlweisen Anschluß des Arbeitsgerätezylinders an den Arbeitsanschluß des Hubsteuerventils.

Aus der US-A-4,518,044 ist ein Steuersystem zur Einstellung der Höhenlage einer als 3-Punkt-Aufhängung ausgebildeten Anbauvorrichtung bekannt. An die Unterlenker der Anbauvorrichtung kann ein integrales Anbaugerät, beispielsweise ein Pflug montiert werden, wobei die Lage der Anbauvorrichtung und/oder die auf das Anbaugerät wirkende Zugkraft durch eine elektronische Steuereinrichtung erfaßt werden. Die Steuereinrichtung liefert ihrerseits Signale an ein Steuerventil, welches den Hydraulikdurchfluß zu den Hubzylindern der Anbauvorrichtung steuert. Dabei wird die vertikale Lage der Anbauvorrichtung in Abhängigkeit eines einstellbaren Lagewertes, der erfaßten Lage und/oder der Zugkraft beeinflußt.

Schlepper mit einem Steuersystem der eingangs genannten Art sind durch die US-A-3,627,053 und die US-A-2,974,733 bekannt. Bei diesen Systemen ist ein Steuerventil für die Anbauvorrichtung sowie ein Mehrwegeventil zur Beeinflussung des entfernt liegenden Zylinders eines geschleppten Arbeitsgerätes vorgesehen. Soll an den Schlepper ein fahrbares Arbeitsgerät angehängt werden, so muß die Bedienungsperson zunächst die Anbauvorrichtung auf ihre maxial obere Lage bringen, damit diese nicht der Anhängedeichsel des Arbeitsgerätes in die Quere kommt. Ferner lassen sich diese bekannten Systeme nicht ohne weiteres mit einem offenen Steuerkreis für entfernt liegende Arbeitsgerätezylinder, die unabhängig von dem Steuerventil der Anbauvorrichtung betätigt werden, versehen.

Die der Erfindung zugrunde liegende Aufgabe wird darin gesehen, ein verbessertes Interfacesystem der eingangs genannten Art anzugeben, bei dem der Arbeitsgerätezylinder eines gezogenen Arbeitsgerätes durch die Hydraulikanlage des Schleppers gespeist wird und die Anbauvorrichtung automatisch auf ihre oberste Lage angehoben wird, sobald ein geschlossener Regelkreis für den Arbeitsgerätezylinder aufgebaut ist, so daß sich die Anbauvorrichtung und die Anhängedeichsel nicht in die Quere kommen. Ferner soll sich der Arbeitsgerätezylinder auch unabhängig von dem Steuerventil der Anbauvorrichtung steuern lassen.

Die Aufgabe wird erfindungsgemäß dadurch gelöst, daß in einer ersten Position des Umschaltventils durch dieses eine direkte Verbindung zwischen der Hydraulikpumpe und dem Arbeitsgerätezylinder sowie eine Verbindung zwischen dem Arbeitsanschluß des Hubsteuerventils und dem Hubwellenzylinder herstellbar ist. Ferner ist in einer zweiten Position des Umschaltventils durch dieses eine direkte Verbindung zwischen der Hydraulikpumpe und dem Hubwellenzylinder sowie eine Verbindung zwischen dem Arbeitsanschluß des Hubsteuerventils und dem Arbeitsgerätezylinder herstellbar.

Vorzugsweise ist das Umschaltventil ein 4/2-Wegeventil mit Richtungsumsteuerung, dessen erster Eingangsanschluß mit der Hydraulikpumpe, dessen zweiter Eingangsanschluß mit dem Ausgang des Hubsteuerventils, dessen erster Ausgangsanschluß mit dem Arbeitsgerätezylinder und dessen zweiter Ausgangsanschluß mit dem Hubwellenzylinder verbindbar ist. Durch Umsteuerung des Umschaltventils lassen sich dessen Eingangs- und Ausgangsanschlüsse wechselweise miteinander verbinden.

Um in der zweiten Position des Umschaltventils einen Hydraulikflüssigkeitsrückfluß von dem Hubwellenzylinder zur Hydraulikpumpe zu verhindern und den Hydraulikdurchfluß von der Hydraulikpumpe zum Hubwellenzylinder zu drosseln, ist es zweckmäßig, ein Rückschlagventil und/oder eine Drosselstelle vorzusehen. Das Rückschlagventil und die Drosselstelle können in den Ventilkörper des Umschaltventils integriert sein.

Einer bevorzugten Weiterbildung der Erfindung zufolge ist zwischen dem Umschaltventil und dem Arbeitsgerätezylinder ein Umsteuerventil angeordnet, durch das die Betätigungsrichtung des Arbeitsgerätezylinders umdrehbar ist. Durch Betätigung des Umsteuerventils läßt sich die Wirkungsrichtung des Arbeitsgerätezylinders von Heben auf Senken oder umgekehrt umsteuern, indem jeweils einer der beidseits des Kolbens liegenden Zylinderräume des Arbeitsgerätezylinders mit Druck beaufschlagbar ist.

Das Umsteuerventil ist vorzugsweise ein 4/4-Wegeventil mit Richtungsumsteuerung, welches einen mit dem Umschaltventil verbindbaren Druckanschluß, einen Sumpfanschluß und zwei mit jeweils einem der beiden Enden des Arbeitszylinders verbindbare Ausgangsanschlüsse enthält.

Gemäß einer weiteren bevorzugten Ausgestaltung der Erfindung ist ein Arbeitsgerätelagesensor vorgesehen, der die Höhenlage der Bodenbearbeitungswerkzeuge relativ zum Geräterahmen erfaßt. Die gewonnenen Höhenlagesignale werden der Steuereinheit zugeführt, die automatisch diese Höhenlagesignale an Stelle der Lagesignale der Anhängevorrichtung zur Steuerung des Arbeitsgerätezylinders heranzieht.

Weitere vorteilhafte Ausgestaltungen und Weiterbildungen der Erfindung gehen aus den Unteransprüchen hervor.

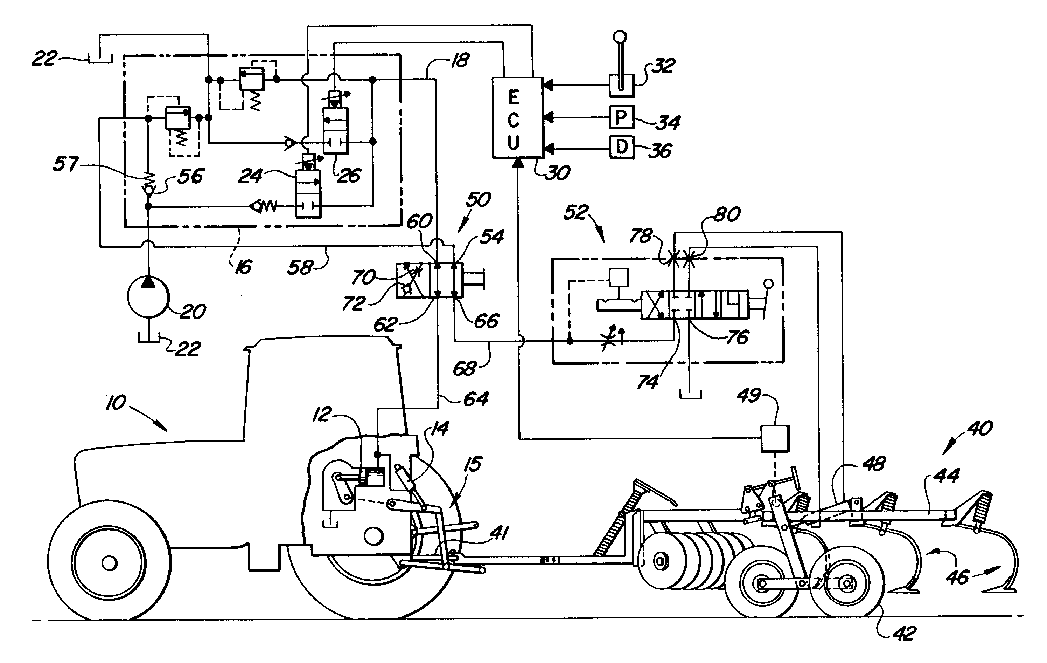

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Die einzige Figur zeigt die schematische Darstellung eines erfindungsgemäßen Interfacesystems.

Der hintere Bereich eines landwirtschaftlichen Schleppers 10 enthält einen Hubwellenzylinder 12 und einen Unterstützungszylinder 14, die dem Anheben und Absenken eines üblichen an eine als 3-Punkt-Aufhängung ausgebildete Anbauvorrichtung 15 montierbaren, jedoch nicht gezeigten integralen Bodenbearbeitungsgerätes (z. B. Pflug) dienen. Ein übliches elektrohydraulisches Hubsteuerventil 16 zur Steuerung der Höhenlage der Anbauvorrichtung 15 steuert den Flüssigkeitsdurchfluß zwischen einer Ausgangsleitung 18 des Hubsteuerventils 16, einer Pumpe 20 und einem Vorratsbehälter oder Sumpf 22. Das Hubsteuerventil 16 enthält ein elektromagnetisch steuerbares Drucksteuerventil 24 und ein elektromagnetisch steuerbares Rückflußsteuerventil 26. Die Ventile 24 und 26 werden durch Steuersignale angesteuert, die durch eine elektronische Steuereinheit (ECU) 30 erzeugt werden. Wie in der US-A-4,979,092 beschrieben wurde, erzeugt die Steuereinheit 30 Steuersignale, die von Eingangssignalen abhängen, wobei die Eingangssignale von einem Wandler 32, der von einer Bedienungsperson über einen Steuerhebel einstellbar ist, von einem Lagesensor 34 für die Höhenlage der Anbauvorrichtung 15 und von einem Zugkraftsensor 36 erzeugt werden.

An ein übliches Zugpendel 41 kann ein gewöhnliches fahrbares Gerät 40 an den Ackerschlepper 10 angehängt und von diesem gezogen werden. Das anhängbare Gerät 40 enthält mehrere Transporträder 42, einen Rahmen 44, der in seiner Höhe einstellbar von den Transporträdern 42 getragen wird und der seinerseits die Bodenbearbeitungsgeräte oder -werkzeuge trägt, und einen oder mehrere doppelseitig wirkende Arbeitsgerätezylinder 48, durch die sich die relative Lage zwischen dem Arbeitswerkzeug 46 und den Transporträdern 42 einstellen läßt. Ein Arbeitsgerätelagesensor 49, beispielsweise ein käufliches Drehpotentiometer, ist auf dem gezogenen Gerät 40 befestigt, um die relative Lage zwischen Rahmen 44 und Transporträdern 42 zu erfassen.

Gemäß vorliegender Erfindung befindet sich ein von Hand einstellbares Umschaltventil 50 und ein von Hand einstellbares Umsteuerventil 52 (SVC) zwischen dem Hubsteuerventil 16 und den Zylindern 12, 14 und 48, so daß die Steuereinheit (30) und das Hubsteuerventil 16 wahlweise verwendet werden können, um entweder den Hubwellenzylinder 12 oder den entfernt liegenden Arbeitsgerätezylinder 48 zu steuern.

Bei dem Umschaltventil 50 handelt es sich um ein 4-Wege/2-Positionenventil mit einem ersten Eingangsanschluß 54, der über die Leitung 58, ein Rückschlagventil 56 und eine Durchflußbegrenzung 57 (welche in die Baueinheit des Hubsteuerventils 16 integriert sind) mit der Pumpe 20 verbunden ist. Ein zweiter Eingangsanschluß 60 des Umschaltventils 50 ist mit der Ausgangsleitung 18 und damit mit dem Arbeitsanschluß des Hubsteuerventils 16 verbunden. Ein erster Ausgangsanschluß 66 des Umschaltventils 50 steht über die Leitung 68 mit dem Druckanschluß 74 des Umsteuerventils 52, und ein zweiter Ausgangsanschluß 62 des Umschaltventils 50 steht über die Leitung 64 mit den Zylindern 12 und 14 in Verbindung. In einer ersten Position leitet das Umschaltventil 50 den an seinem ersten Eingangsanschluß 54 anstehenden Pumpendruck an seinen ersten Ausgangsanschluß 66 und den an seinem zweiten Eingangsanschluß 60 anstehenden, vom Hubsteuerventil 16 herrührenden Steuerdruck an seinen zweiten Ausgangsanschluß 62 weiter. In einer zweiten Position legt das Umschaltventil 50 den Pumpendruck seines ersten Eingangsanschlusses 54 über eine interne Verengung 70 und ein internes Rückschlagventil 72 an seinen zweiten Ausgangsanschluß 62 und den an seinem zweiten Eingangsanschluß 60 anstehenden, von dem Hubsteuerventil 16 herrührenden Steuerdruck an seinen ersten Ausgangsanschluß 66 an.

Bei dem Umsteuerventil 52 handelt es sich um ein gewöhnliches, bekanntes 4-Wege/4-Positionenventil, das durch Rasten in seinen Positionen gehalten wird. Das Umsteuerventil 52 weist einen an den ersten Ausgangsanschluß 66 des Umschaltventils 50 angeschlossenen Druckanschluß 74 und einen mit dem Vorratsbehälter 22 in Verbindung stehenden Sumpfanschluß 76 auf. Die Ausgangsanschlüsse 78, 80 des Umsteuerventils 52 sind mit den beiden Anschlüssen des Arbeitsgerätezylinders 48 verbunden.

Die Wirkungsweise des oben beschriebenen Systems ist folgende:
Wenn kein fahrbares Gerät an den Ackerschlepper 10 angehängt ist, befindet sich das Umschaltventil 50 in der dargestellten Position. In dieser Position steht der Hubwellenzylinder 12 mit dem Hubsteuerventil 16 in Verbindung, und die Anbauvorrichtung 15 wird in bekannter Weise in Abhängigkeit der Signale des Steuerhebelwandlers 32, des Lagesensors 34 und des Zugkraftsensors 36 gesteuert. Zur gleichen Zeit ist das Umsteuerventil 52 über die Leitungen 58 und 68 mit dem Pumpendruck der Pumpe 20 beaufschlagt, so daß das Umsteuerventil 52 zur Steuerung irgend einer hydraulischen Funktion (beispielsweise des Arbeitszylinders 48), an die es anschließbar ist, verwendbar ist.

Soll ein fahrbares Gerät 40 von dem Ackerschlepper 10 gezogen werden, so werden die Arbeitsgerätezylinder 48 des gezogenen Gerätes 40 über nicht gezeigte Kuppler mit dem Umsteuerventil 52 verbunden. Sollen dabei die Arbeitsgerätezylinder 48 in einem geschlossenen Regelkreis betrieben werden, wird das Umschaltventil 50 von Hand in seine zweite Position gebracht, und an Stelle des Lagesensors 34 der Anbauvorrichtung 15 wird ein Arbeitsgerätelagesensor 49 an die Steuereinheit 30 angeschlossen. In seiner zweiten Position verbindet das Umsteuerventil 52 den Hubwellenzylinder 12 mit der Pumpe 20. Dies hat zur Folge, daß die Anbauvorrichtung 15 automatisch auf ihre maximale Höhe (Transportposition) angehoben wird. Damit kann sie nicht dem geschleppten Gerät 40 in die Quere kommen. Durch die Verengung 70 wird die Hubgeschwindigkeit der Anbauvorrichtung 15 gesteuert, und das Rückschlagventil 72 hält die Anbauvorrichtung 15 in der angehobenen Lage, wenn der Hydraulikdruck der Pumpe 20 unter den Belastungsdruck der Anbauvorrichtung 15 fällt. Zur gleichen Zeit wird über die Leitungen 18 und 68 der Druckanschluß 74 des Umsteuerventils 52 an den gesteuerten Druck des Arbeitsanschlusses des Hubsteuerventils 16 angelegt. Wird das Umsteuerventil 52 in eine verrastbare "Arbeitsposition" bewegt, so wird der Arbeitsgerätezylinder 48 von der Steuereinheit 30 und dem Hubsteuerventil 16 in Abhängigkeit des einstellbaren Signals des Steuerhebelwandlers 32 und des Signals des Arbeitsgerätelagesensors 49 gesteuert.

Soll der Arbeitsgerätezylinder 48 in einem "Anfahrmodus" gesteuert werden, so wird der Steuerhebel und mit ihm der Steuerhebelwandler 32 in die der maximal angehobenen Stellung entsprechende Lage gebracht, so daß ein maximaler Druck an dem Druckanschluß 74 des Umsteuerventils 52 anliegt. Steht das Umsteuerventil 52 in seiner "Absenkposition", so wird die Flußrichtung zum Arbeitsgerätezylinder 48 umgekehrt. Hierdurch werden die Transporträder 42 eingefahren und das Bodenbearbeitungswerkzeug 46 abgesenkt. Die Bodenbearbeitungswerkzeuge 46 können wieder angehoben werden, indem das Umsteuerventil 52 in seine Anhebeposition gebracht wird.

Mit diesem System kann ein zweiseitig wirkender Arbeitsgerätezylinder durch die Steuereinheit und das Hubsteuerventil der Anbauvorrichtung angesteuert werden. Dabei kann das gezogene Gerät die gleichen hydraulischen Anschlüsse haben, die für eine bisher übliche Umschaltventilsteuerung vorgesehen waren. Die erfindungsgemäße Lösung macht keine Änderung der Hydraulikanschlüsse erforderlich.

Auch wenn die Erfindung lediglich anhand eines Ausführungsbeispiels beschrieben wurde, erschließen sich für den Fachmann im Lichte der vorstehenden Beschreibung viele verschiedenartige Alternativen, Modifikationen und Varianten, die unter die vorliegende Erfindung fallen. Beispielsweise kann die vorliegende Erfindung auch in Verbindung mit einem beliebigen gezogenen Gerät Verwendung finden, dessen Arbeitswerkzeuge sich in bezug auf den Rahmen verstellen lassen. Ferner können die Arbeitsgerätezylinder in Abhängigkeit erfaßter Zugkräfte gesteuert werden. Zu diesem Zweck können zusätzliche Zugkraftsensoren vorgesehen sein, die die an dem Zugpendel angreifende Zugkraft erfassen. Der Arbeitsgerätezylinder des gezogenen Gerätes kann auch in Abhängigkeit eines erfaßten Radschlupfes oder als Funktion verschiedener Kombinationen erfaßter Parameter mit zusätzlichen Sensoren und einer Steuereinheit, wie sie aus der US-A-4,518,044 bekannt ist, gesteuert werden.

## Patentansprüche

1. Steuersystem für einen eine höhenverstellbare Anbauvorrichtung (15) enthaltenden Schlepper (10) und ein anhängbares Arbeitsgerät (40), wobei das Steuersystem eine Hydraulikpumpe (20), einen Vorratsbehälter (22), einen Hubwellenzylinder (12) zum Anheben und Absenken der Anbauvorrichtung (15), ein Hubsteuerventil (16) mit einem an den Hubzylinder (12) anschließbaren Arbeitsanschluß (18), eine Steuereinheit (30) zur Steuerung des am Arbeitsanschluß (18) des Hubsteuerventils (16) anstehenden Drucks in Abhängigkeit von Meßwerten (34, 36) und wenigstens einem einstellbaren Steuersignal (32), einen Arbeitsgerätezylinder (48) zum Anheben und Absenken von Bodenbearbeitungswerkzeugen (46) des anhängbaren Arbeitsgerätes (40) und ein zwischen wenigstens zwei Positionen manuell einstellbares Umschaltventil (50) zum wahlweisen Anschluß des Arbeitsgerätezylinders (48) an den Arbeitsanschluß (18) des Hubsteuerventils (16) enthält, dadurch gekennzeichnet, daß in einer ersten Position des Umschaltventils (50) durch dieses eine Verbindung zwischen der Hydraulikpumpe (20) und dem Arbeitsgerätezylinder (48) sowie eine Verbindung zwischen dem Arbeitsanschluß (18) des Hubsteuerventils (16) und dem Hubwellenzylinder (12) und daß in einer zweiten Position des Umschaltventils (50) durch dieses eine Verbindung zwischen der Hydraulikpumpe (20) und dem Hubwellenzylinder (12) sowie eine Verbindung zwischen dem Arbeitsanschluß (18) des Hubsteuerventils (16) und dem Arbeitsgerätezylinder (48) herstellbar ist.

2. Steuersystem nach Anspruch 1, dadurch gekennzeichnet, daß das Umschaltventil (50) ein 4/2-Wegeventil mit Richtungsumsteuerung ist, dessen erster Eingangsanschluß (54) mit der Hydraulikpumpe (20), dessen zweiter Eingangsanschluß (60) mit dem Arbeitsanschluß (18) des Hubsteuerventils (16), dessen erster Ausgangsanschluß (66) mit dem Arbeitsgerätezylinder (48) und dessen zweiter Ausgangsanschluß (62) mit dem Hubwellenzylinder (12) verbindbar ist.

3. Steuersystem nach Anspruch 1 oder 2, dadurch gekennzeichnet, daß ein Rückschlagventil (72) vorgesehen ist, das in der zweiten Position des Umschaltventils (50) einen Hydraulikflüssigkeitsrückfluß von dem Hubwellenzylinder (12) zu der Hydraulikpumpe (20) verhindert.

4. Steuersystem nach einem der Ansprüche 1 bis 3, dadurch gekennzeichnet, daß eine Durchflußverengung (70) vorgesehen ist, die in der zweiten Position des Umschaltventils (50) den Durchfluß zwischen der Hydraulikpumpe (20) und dem Hubwellenzylinder (12) begrenzt.

5. Steuersystem nach einem der Ansprüche 1 bis 4, dadurch gekennzeichnet, daß zwischen dem Umschaltventil (50) und dem Arbeitsgerätezylinder (48) ein Umsteuerventil (52) angeordnet ist, durch das die Betätigungsrichtung des Arbeitsgerätezylinders (48) umdrehbar ist.

6. Steuersystem nach Anspruch 5, dadurch gekennzeichnet, daß das Umsteuerventil ein 4/4-Wegeventil mit Richtungsumsteuerung ist, welches einen mit dem Umschaltventil (50) verbindbaren Druckanschluß (74), einen Sumpfanschluß (76) und zwei mit jeweils einem der beiden Enden des Arbeitsgerätezylinders (48) verbindbare Ausgangsanschlüsse (78, 80) aufweist.

7. Steuersystem nach einem der Ansprüche 1 bis 6, dadurch gekennzeichnet, daß ein Arbeitsgerätelagesensor (49), der die Höhenlage der Bodenbearbeitungswerkzeuge (46) relativ zum Geräterahmen (44) oder den Transporträdern (42) erfaßt, vorgesehen ist, dessen Signale der Steuereinheit (30) zugeführt werden, und daß die Steuereinheit (30) den Arbeitsgerätezylinder (48) in Abhängigkeit dieser Signale und den einstellbaren Steuersignalen (32) steuert.

## Claims

1. A control system for a tractor (10) having a hitch device (15), which is adjustable in height, and a trailed working implement (40), wherein the control system includes a hydraulic pump (20), a reservoir (22), a lift shaft cylinder (12) for raising and lowering the hitch device (15), a lift control valve (16) with a working connection connectable to the lift cylinder (12), a control unit (30) for control of the pressure present at the working connection (18) of the lift control valve (16) in dependence on measured values (34, 36) and at least one adjustable control signal (32), a working implement cylinder (48) for raising and lowering ground-working tools (46) of the trailed working implement (40) and a changeover valve (50) which is manually adjustable between at least two positions for selective connection of the working implement cylinder (48) to the working connection (18) of the lift control valve (16), characterized in that a connection can be made through the changeover valve (50) in a first position thereof between the hydraulic pump (20) and the working implement cylinder (48) as well as connection between the working connection (18) of the lift control valve (16) and the lift shaft cylinder (12) and in that a connection can be made through the changeover valve (50) in a second position thereof between the hydraulic pump (20) and the lift shaft cylinder (12) as well as a connection between the working connection (18) of the lift control valve (16) and the working implement cylinder (48).

2. A control system according to claim 1, characterized in that the changeover valve (50) is a 4/2 way valve with direction control, whose first input connection (54) which can be connected to the hydraulic pump (20), whose second input connection (60) which can be connected to the working connection (18) of the lift control valve (16), whose first output connection (66) which can be connected to the working implement cylinder (48) and whose second output connection (62) which can be connected to the lift shaft cylinder (12).

3. A control system according to claim 1 or 2, characterized in that a non-return valve (72) is provided and prevents return flow from lift shaft cylinder (12) to the hydraulic pump (20) in the second position of the changeover valve (50).

4. A control system according to any of claims 1 to 3, characterized in that a flow restriction (70) is provided to restrict the flow between the hydraulic pump (20) and the lift shaft cylinder (12) in the second position of the changeover valve (50).

5. A control system according to any of claims 1 to 4, characterized in that a reversing valve (52) is arranged between the changeover valve (50) and the working implement cylinder (48) for reversing the direction of operation of the working implement cylinder (48).

6. A control system according to claim 5, characterized in that the reversing valve is a 4/4 way valve with direction control, which comprises a pressure connection (74) which can be connected to the changeover valve (50), a sump connection (76) and two output connections (78, 80) which can be connected to the two ends of the working implement cylinder (48).

7. A control system according to any of claims 1 to 6, characterized in that a working implement position sensor (49) is provided to detect the height position of the ground-working tools (46) relative to the implement frame (44) or the transport wheels (42), its signals being applied to the control unit (30), and in that the control unit (30) controls the working implement cylinder (48) in dependence on these signals and the adjustable control signal (32).

## Revendications

1. Système de commande pour un tracteur (10) contenant un dispositif d'attelage (15) réglable en hauteur et un équipement de travail attelable (40), le système de commande comprenant une pompe hydraulique (20), un réservoir (22), un vérin d'arbre de levage (12) pour relever et abaisser le dispositif d'attelage (15), un distributeur de commande de levage (16) avec un raccord de travail (18) pouvant être relié au vérin de levage (12), une unité de commande (30) pour commander la pression appliquée au raccord de travail (18) du distributeur de commande de levage (16) en fonction de valeurs de mesure (34, 36) et d'au moins un signal de commande réglable (32), un vérin d'équipement de travail (48) pour relever et abaisser des outils de travail du sol (46) de l'équipement de travail attelable (40), et un distributeur de commutation (50) réglable manuellement entre au moins deux positions pour raccorder sélectivement le vérin d'équipement de travail (48) au raccord de travail (18) du distributeur de commande de levage (16), **caractérisé** en ce qu'au moyen du distributeur de commutation (50) dans une première position, on peut réaliser une liaison entre la pompe hydraulique (20) et le vérin d'équipement de travail (48) ainsi qu'une liaison entre le raccord de travail (18) du distributeur de commande de levage (16) et le vérin d'arbre de levage (12), et en ce qu'au moyen du distributeur de commutation (50) dans une deuxième position, on peut réaliser une liaison entre la pompe hydraulique (20) et le vérin d'arbre de levage (12) ainsi qu'une liaison entre le raccord de travail (18) du distributeur de commande de levage (16) et le vérin d'équipement de travail (48).

2. Système de commande selon la revendication 1, **caractérisé** en ce que le distributeur de commutation (50) est un distributeur 4/2 voies avec inversion de direction, dont le premier raccord d'entrée (54) peut être relié à la pompe hydraulique (20), le deuxième raccord d'entrée (60) au raccord de travail (18) du distributeur de commande de levage (16), le premier raccord de sortie (66) au vérin d'équipement de travail (48) et le deuxième raccord de sortie (62) au vérin d'arbre de levage (12).

3. Système de commande selon la revendication 1 ou 2, **caractérisé** en ce qu'il est prévu une soupape de non retour (72) qui, dans la deuxième position du distributeur de commutation (50), empêche un retour de liquide hydraulique du vérin d'arbre de levage (12) vers la pompe hydraulique (20).

4. Système de commande selon l'une quelconque des revendications 1 à 3, **caractérisé** en ce qu'il est prévu un étranglement d'écoulement (70) qui, dans la deuxième position du distributeur de commutation (50), limite l'écoulement entre la pompe hydraulique (20) et le vérin d'arbre de levage (12).

5. Système de commande selon l'une quelconque des revendications 1 à 4, **caractérisé** en ce qu'un distributeur d'inversion (52) est disposé entre le distributeur de commutation (50) et le vérin d'équipement de travail (48), et il permet d'inverser le sens de manoeuvre du vérin d'équipement de travail (48).

6. Système de commande selon la revendication 5, **caractérisé** en ce que le distributeur d'inversion est un distributeur 4/4 voies avec inversion de direction, qui présente un raccord de pression (74) pouvant être relié au distributeur de commutation (50), un raccord de réservoir (76) et deux raccords de sortie (78, 80) pouvant être respectivement reliés à une des deux extrémités du vérin d'équipement de travail (48).

7. Système de commande selon l'une quelconque des revendications 1 à 6, **caractérisé** en ce qu'il est prévu un capteur (49) de position d'équipement de travail, qui détecte la position en hauteur des outils de travail du sol (46) par rapport au châssis (44) de l'équipement ou aux roues de transport (42) et dont les signaux sont transmis à l'unité de commande (30), et en ce que l'unité de commande (30) commande le vérin d'équipement de travail (48) en fonction de ces signaux et des signaux de commande réglables (32).
